# EUROPÄISCHE PATENTSCHRIFT

(11) **EP 0 794 220 B1**
(45) Veröffentlichungstag und Bekanntmachung des Hinweises auf die Patenterteilung: **29.05.2002**
(21) Anmeldenummer: 97102609.1
(22) Anmeldetag: 19.02.1997
(51) Int. Cl.: C08K 5/5313, C08L 67/00

(54) **Erhöhung der Kriechstromfestigkeit in Formteilen aus schwerentflammbaren Polyesterformmassen**
Increasing the tracking index in mouldings of flame-retardant polyesters
L'amélioration de la résistance aux courants de fuite des pièces moulées de polyester ignifugée

(30) Priorität: 04.03.1996 DE 19608008
(43) Veröffentlichungstag der Anmeldung: 10.09.1997
(73) Patentinhaber: Ticona GmbH, 65451 Kelsterbach (DE)
(72) Erfinder: Kleiner, Hans-Jerg, Dr., 61476 Kronberg (DE); Budzinsky, Winfried, 65812 Bad Soden (DE); Kirsch, Günther, Dr., 65812 Bad Soden (DE)

(56) Entgegenhaltungen:
- EP-A- 0 699 708
- DE-A- 2 252 258
- DE-A- 2 915 116
- GB-A- 1 466 154
- US-A- 3 594 347

## Beschreibung

Die Erfindung betrifft die Verwendung flammgeschützter Polyesterformmassen, die Calcium- oder Aluminiumphosphinate enthalten, zur Herstellung von Formteilen mit erhöhter Kriechstromfestigkeit.

Polyesterformmassen werden in vielen Anwendungen eingesetzt, in denen aus Sicherheitsgründen besondere Anforderungen an die Schwerentflammbarkeit oder das Selbstverlöschen nach Entfernen der Zündquelle gestellt werden. Weltweit verbreitet und zum internationalen Standard gehörend sind zum Beispiel die Vorschriften von Underwriter Laboratories (UL) geworden ("Standard Tests For Flammability of Plastic Materials For Parts in Devices and Appliances, UL 94"). Für Anwendungen mit besonders hohen Ansprüchen wird die Klassifikation 94 V-O gefordert.

Diese Forderung wird bei Verwendung von Polyesterformmassen meistens durch den Zusatz von bromhaltigen organischen Verbindungen und von Schwermetalloxiden erreicht. Ein Nachteil derartiger Formmassen ist die relativ geringe Kriechstromfestigkeit. Auch dies ist ein Sicherheitsmerkmal, das z.B. von UL geprüft wird (Comparative Tracking Index, CTI, festgelegt im "Standard for Polymeric Materials - Short Term Properties Evaluation, UL 746A"). Je höher der Wert, desto größer die Sicherheit gegen Kriechstrombildung.

Es wurde nun überraschenderweise gefunden, daß Calcium- und Aluminiumsalze von Phosphin- oder Diphosphinsäuren eine ausgezeichnete flammhemmende Wirkung in Polyester-Kunststoffen zeigen und Formteile aus diesen Polyester-Kunststoffen eine hohe Kriechstromfestigkeit aufweisen. Im folgenden bezeichnet der Begriff "Phosphinate" Calcium- und AluminiumSalze der Phosphin- und Diphosphinsäuren und deren Polymere.

Bevorzugte Phosphinate sind Phosphinsäuresalze gemäß Formel (I) und Diphosphinsäuresalze gemäß Formel (II) und/oder deren Polymere 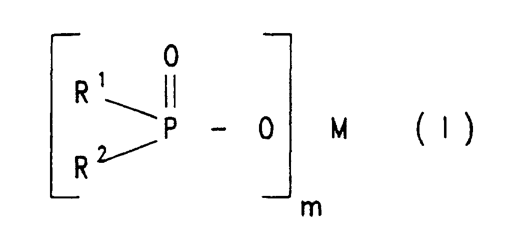 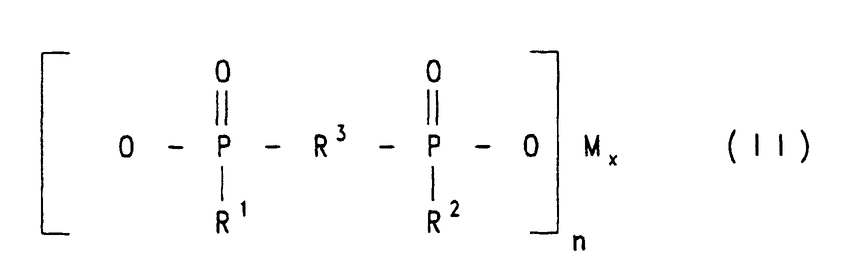 wobei
- R¹, R²: C₁-C₁₆-Alkyl, vorzugsweise C₁-C₈-Alkyl, linear oder verzweigt, z.B. Methyl, Ethyl, n-Propyl, iso-Propyl, n-Butyl, tert.-Butyl, n-Pentyl, n-Octyl, Phenyl;
- R³: C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen;
Alkylarylen, z.B. Methyl-phenylen, Ethyl-phenylen, tert.-Butylphenylen, Methyl-naphthylen, Ethyl-naphthylen, tert.-Butylnaphthylen;
Arylalkylen, z.B. Phenyl-methylen, Phenyl-ethylen, Phenylpropylen, Phenyl-butylen;
- M: Calcium-, Aluminium-Ionen;
- m: 2 oder 3;
- n: 1 oder 3;
- x: 1 oder 2
bedeuten.

Polyester sind Polymere, die wiederholende, über eine Estergruppe verbundene Einheiten in der Polymerkette enthalten. Polyester, die erfindungsgemäß eingesetzt werden können, sind beispielsweise in "Ullmann's encyclopedia of industrial chemistry, ed. Barbara Elvers, Vol. 21A, Kapitel 'Polyesters' (S. 227-251), VCH, Weinheim-Basel-Cambridge-New York 1992" beschrieben, worauf Bezug genommen wird. Polyester werden im folgenden auch als Polymere bezeichnet.

Die Formteile weisen eine gute Kriechstromfestigkeit (höherem CTI) auf und eignen sich daher besonders für folgende Anwendungen:

Elektrische Bauteile, wie Spulenkörper, Transformatoren, Relais, Schalter, Steckverbindung, Motoren und Motorenteile (Rotoren, Lagerschilde etc.), dreidimensionale Teile mit integrierten Leiterstrukturen ("Molded Interconnection Devices" = MID), Sockel (z.B. SIMM-Sockel);
mechanische Bauteile in Elektro- und Haushaltsgeräten, z. B. Zahnräder, Hebel, Nockenwellen, Abstandhalter, Scharniere, Gleitlager;
Gehäuse, Abdeckungen und Ummantelungen von elektrischen Bauteilen und Geräten, z. B. Kondensatorgehäuse, Relaisgehäuse, Kondensatordeckel, Kabelummantelungen.

Die Formteile lassen sich vorzugsweise durch Spritzgießen herstellen, zum Teil werden sie aber auch durch Extrudieren oder Pressen gefertigt.

Die Phosphinate, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinate sind beispielsweise: Isobutyl-methyl-phosphinsäure, Octyl-methylphosphinsäure, Dimethylphosphinsäure, Ethyl-methylphosphinsäure, Diethylphosphinsäure, Methyl-n-propyl-phosphinsäure, Methan-1,2-di(methylphosphinsäure), Ethan-1,2-(dimethylphosphinsäure), Hexan-1,6-di(methylphosphinsäure), Benzol-1,4-(dimethylphosphinsäure), Methyl-phenyl-phosphinsäure, Diphenylphosphinsäure.

Die Phosphinate können nach bekannten Methoden hergestellt werden. Die Phosphinsäuren werden dabei in wäßriger Lösung mit Metallcarbonaten, Metallhydroxiden oder Metalloxiden der betreffenden Metalle umgesetzt.

Die Menge des den Polymeren zuzusetzenden Phosphinates kann innerhalb weiter Grenzen variieren. Im allgemeinen verwendet man 5 bis 35 Gew.-%, bezogen auf das Polymer, bevorzugt 10 bis 25 Gew.-%, insbesondere 15 bis 20 Gew.-% des Phosphinsäuresalzes. Die optimale Menge des Phosphinates hängt von der Natur des Polymeren und der Art des eingesetzten Phosphinates ab und kann durch Versuche leicht bestimmt werden.

Die Phosphinate können je nach Art des verwendeten Polymeren und der gewünschten Eigenschaften in verschiedener physikalischer Form angewendet werden. So können die Phosphinate z. B. zur Erzielung einer besseren Dispersion im Polymeren zu einer feinteiligen Form vermahlen werden. Falls erwünscht können auch Gemische verschiedener Phosphinate eingesetzt werden.

Die Phosphinate sind im allgemeinen thermisch stabil, zersetzen die Polymeren weder bei der Verarbeitung noch beeinflußen sie den Herstellprozess der Polyesterformmasse. Die Phosphinate sind unter Herstellungs- und Verarbeitungsbedingungen für Polymere nicht flüchtig.

Das Phosphinat kann in das Polymer eingearbeitet werden, indem beides vermischt und anschließend in einem Compoundieraggregat (z. B. Zweischneckenextruder) das Polymer aufgeschmolzen und das Phosphinsäuresalz in der Polymerschmelze homogenisiert wird. Die Schmelze kann als Strang abgezogen, gekühlt und granuliert werden. Das Phosphinsäuresalz kann auch direkt in das Compoundieraggregat dosiert werden.

Es ist ebenso möglich, die Phosphinate einem fertigen Polyestergranulat beizumischen und direkt auf einer Spritzgießmaschine zu verarbeiten oder vorher in einem Extruder aufzuschmelzen, zu granulieren und nach einem Trocknungsprozeß zu verarbeiten.

Die Phosphinate können auch während des Herstellprozesses des Polyesters zugegeben werden.

Die Polyesterformmassen können außer den Phosphinaten Füllstoffe (zum Beispiel Talkum, Glimmer, Wollastonit, Kreide, Glaskugeln), Verstärkungsstoffe (wie Glasfasern, Glasflocken, mineralische Fasern, Kohlenstoffaser), Ruß, Farbstoffe, Pigmente, Stabilisatoren, UV-Stabilisatoren, Gleit- und Entformungshilfsmittel, Nukleierungsmittel, Antistatika, Weichmacher oder sonstige Additive enthalten.

Besonders bevorzugt werden Formteile aus Formmassen, die Polyester, ein Phosphinat und Glasfaser enthalten. Formteile aus solchen Formmassen zeigen besonders günstige flammhemmende Eigenschaften.

### Beispiele

### 1. Herstellung von Phosphinsäuresalzen

### 1.1 Herstellung des Calciumsalzes der Ethyl-methylphosphinsäure

1630 g (15,1 Mol) Ethyl-methylphosphinsäure werden in 3 l Wasser gelöst und 422,8 g (7,55 Mol) Calciumoxid (ungelöschter Kalk) portionsweise unter lebhaftem Rühren eingetragen in 1,5 Stunden, die Temperatur steigt auf 75°C. Dann wird weiter Calciumoxid eingetragen, bis eine in die Lösung eingeführte pH-Elektrode pH = 7 anzeigt. Nun wird etwas Aktivkohle zugegeben und 1,5 Stunden am Rückfluß gerührt und dann filtriert. Das Filtrat wird zur Trockene eingedampft und bei 120°C bis zu Gewichtskonstanz im Vakuum-Trockenschrank getrocknet. Man erhält 1920 g eines weißen Pulvers, das bis 300°C nicht schmilzt. Ausbeute 100 % der Theorie.

### 1.2 Herstellung des Aluminiumsalzes der Ethyl-methylphosphinsäure

2106 g (19,5 Mol) Ethyl-methylphosphinsäure werden in 6,5 l Wasser gelöst und 507 g (6,5 Mol) Aluminiumhydroxid unter lebhaftem Rühren zugegeben, dabei wird auf 85°C erwärmt. Insgesamt wird 65 Stunden bei 80 - 90°C gerührt, dann wird auf 60°C abgekühlt und abgesaugt. Man erhält nach Trocknung im Vakuum-Trockenschrank bei 120°C bis zur Gewichtskonstanz 2140 g eines feinkörnigen Pulvers, das bis 300°C nicht schmilzt. Ausbeute: 95 % der Theorie.

### 1.3 Herstellung des Calciumsalzes der Ethan-1,2-bismethylphosphinsäure

325,5 g (1,75 Mol) Ethan-1,2-bismethylphosphinsäure werden in 500 ml Wasser gelöst und 129,5 g (1,75 Mol) Calciumhydroxid portionsweise unter lebhaftem Rühren in einer Stunde eingetragen. Dann wird einige Stunden bei 90 bis 95°C gerührt, abgekühlt und abgesaugt. Man erhält 335 g nach Trocknung im Vakuum-Trockenschrank bei 150°C. Das Produkt schmilzt bis 380°C nicht. Ausbeute: 85 % der Theorie.

### 1.4 Herstellung des Aluminiumsalzes der Ethan-1,2-bismethylphosphinsäure

334,8 g (1,8 Mol) Ethan-1,2-bismethylphosphinsäure werden in 600 ml Wasser gelöst und 93,6 g (1,2 Mol) Aluminiumhydroxid portionsweise unter lebhaftem Rühren in einer Stunde eingetragen. Dann wird 24 Stunden unter Rückfluß gehalten und anschließend heiß abgesaugt und mit Wasser gewaschen. Man erhält nach Trocknung 364 g eines weißen Pulvers, das bis 380°C nicht schmilzt. Ausbeute: 100 % der Theorie.

### 1.5 Herstellung des Calciumsalzes der Methyl-propylphosphinsäure

366 g (3,0 Mol) Methyl-propylphosphinsäure werden in 600 ml Wasser gelöst und 84 g (1,5 Mol) Calciumoxid portionsweise unter lebhaftem Rühren eingetragen, dabei steigt die Temperatur auf 65°C. Nun wird bei dieser Temperatur gehalten, bis eine klare Lösung entsteht. Nun wird zur Trockene im Vakuum eingedampft. Man erhält nach Trocknung des Rückstandes bei 120°C im Vakuum-Trockenschrank 364 g. Ausbeute: ca. 85 % der Theorie.

### 1.6 Herstellung des Aluminiumsalzes der Methyl-propylphosphinsäure

115 g (0,943 Mol) Methyl-propylphosphinsäure werden in 310 g Wasser gelöst und 24,5 g (0,314 Mol) Aluminiumhydroxyd zugegeben. Dann wird 23 Stunden unter Rühren bei 98°C gehalten. Anschliessend wird abgesaugt und im Vakuumtrockenschrank getrocknet. Man erhält 113 g eines weißen Pulvers, das bis 380°C nicht schmilzt. Ausbeute: 90 % der Theorie.

### 1.7 Herstellung des Aluminiumsalzes der Methyl-octylphosphinsäure

115,2 g (0,6 Mol) Methyl-octylphospinsäure werden mit 250 ml Wasser auf 60°C erhitzt. Nun werden 15,6 g (0,2 Mol) Aluminiumhydroxyd zugegeben und auf 80°C erwärmt bei ständigem Rühren. Insgesamt wird der Ansatz bei 80 bis 90°C 15 Stunden gerührt, dann wird abgesaugt. Nach dem Trocknen erhält man 115 g eines weißen Pulvers, das bis 360°C nicht schmilzt. Ausbeute: 96 % der Theorie.

### 2. Vergleichende Kriechwegbildung (CTI) der Formmassen

### 2.1 Herstellung von Compounds und Probekörpern

Die phosphorhaltige Verbindung wurde mit dem Polymeren vermischt und auf einem handelsüblichen Zweiwellen-Compounder eingearbeitet. Bei glaserfaserverstärkten Einstellungen wurden für Polyester handelsübliche Glasfasern in die Schmelze dosiert. Die Vergleichsproben 3 und 4 mit bromhaltigen Flammschutzkomponenten wurden auf dem gleichen Wege hergestellt.

Die Massetemperaturen bei der Compoundierung betrugen ca. 250°C.

Die Probekörper wurden auf einer Spritzgießmaschine nach ISO 7792-2 hergestellt. Verwendet wurden Vielzweckprobekörper nach ISO 3167.

### 2.2 Versuchsergebnisse

Folgende Proben wurden hergestellt und geprüft:
1. Polybutylenterephthalat, unverstärkt mit 15 % MEP-Al-Salz
2. Polybutylenterephthalat, verstärkt mit 30 % Glasfasern, mit 20 % MEP-Al-Salz
3. Polybutylenterephthalat, unverstärkt mit 18 % bromhaltige Flammschutzkomponenten (Vergleichsbeispiel)
4. Polybutylenterephtalat, verstärkt mit 30 % Glasfasern, mit 13 % bromhaltige Flammschutzkomponenten (Vergleichsbeispiel)

### Es bedeuten:

MEP-Al-Salz: Aluminiumsalz der Ethylmethylphosphinsäure Bromhaltige Flammschutzkomponenten: bromiertes Polycarbonat (Great Lakes BC 58), Antimontrioxid im Verhältnis 2:1

Die Ergenisse sind in der folgenden Tabelle zusammengestellt:

| Probe | Brandklasse UL 94, Probekörperdicke 0,8 mm | Kriechwegbildung CTI IEC 112 |
|---|---|---|
| 1 | V-O | 525 |
| 2 | V-O | 500 |
| 3 | V-O | 225 |
| 4 | V-O | 225 |

Die Tabelle zeigt deutlich die Überlegenheit der Einstellungen mit MEP-Al-Salz.

## Patentansprüche

1. Verwendung einer Polyesterformmasse, die mindestens ein Calcium- oder Aluminiumsalz von einer Phosphinsäure, Diphosphinsäure oder deren Polymere enthält, zur Herstellung von Formteilen mit erhöhter Kriechstromfestigkeit.

2. Verwendung eines Calcium- oder Aluminiumsalzes von einer Phosphinsäure, Diphosphinsäure oder deren Polymere zur Erhöhung der Kriechstromfestigkeit von Polyesterformmassen und daraus hergestellten Formteilen.

3. Verwendung nach einem der Ansprüche 1 bis 2, **dadurch gekennzeichnet, daß** ein Phosphinsäuresalz gemäß Formel (I) oder ein Diphosphinsäuresalz gemäß Formel (II) und/oder deren Polymere 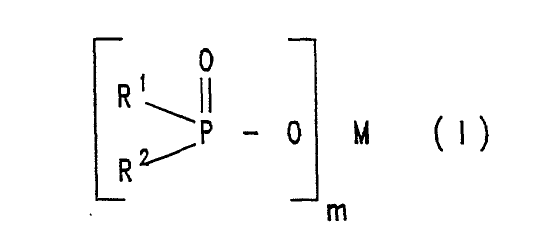 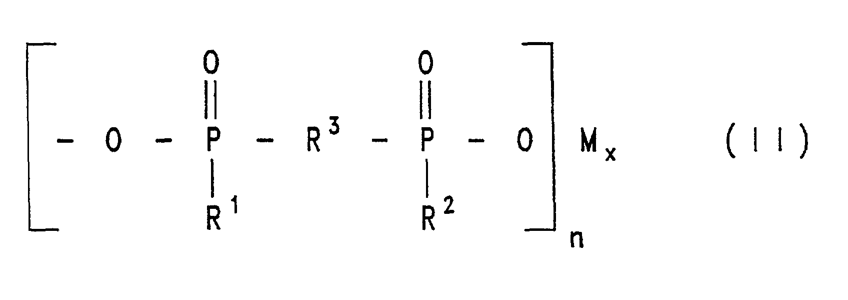 eingesetzt wird, wobei
R¹, R² C₁-C₁₆-Alkyl, vorzugsweise C₁-C₈-Alkyl, linear oder verzweigt, z.B. Methyl, Ethyl, n-Propyl, iso-Propyl, n-Butyl, tert.-Butyl, n-Pentyl, n-Octyl, Phenyl;
R³ C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen;
Alkylarylen, z.B. Methyl-phenylen, Ethyl-phenylen, tert.-Butyl-phenylen, Methyl-naphthylen, Ethyl-naphthylen, tert.-Butyl-naphthylen;
Arylalkylen, z.B. Phenyl-methylen, Phenyl-ethylen, Phenyl-propylen, Phenyl-butylen;
M Calcium-, Aluminium-lonen;
m 2 oder 3;
n 1 oder 3;
x 1 oder 2
bedeuten.

4. Verwendung nach einem der Ansprüche 1 bis 3, **dadurch gekennzeichnet, daß** der Polyester außerdem Glasfaser enthält.

5. Verwendung nach einem der Ansprüche 1 bis 4, **dadurch gekennzeichnet, daß** die Kriechstromfestigkeit von Formteilen in Form von elektrischen Bauteilen, mechanischen Bauteilen in Elektro- und Haushaltsgeräten, oder Gehäusen, Abdeckungen und Ummantelungen von elektrischen Bauteilen und Geräten erhöht wird.

6. Verwendung nach einem der Ansprüche 1 bis 5, **dadurch gekennzeichnet, daß** die Kriechstromfestigkeit von Formteilen in Form von Spulenkörpern, Transformatoren, Relais, Schaltern, Steckverbindungen, Motoren und Motorenteilen, dreidimensionalen Teilen mit integrierten Leiterstrukturen, Sockeln, Zahnrädern, Hebeln, Nockenwellen, Abstandhaltern, Scharnieren, Gleitlagern, Kondensatorgehäusen, Relaisgehäusen, Kondensatordeckeln oder Kabelummantelungen erhöht wird.

## Claims

1. The use of a polyester molding material comprising at least one calcium or aluminum salt of a phosphinic or diphosphinic acid or polymers thereof for producing moldings having an increased tracking current resistance.

2. The use of a calcium or aluminum salt of a phosphinic or diphosphinic acid or polymers thereof for increasing the tracking current resistance of polyester molding materials and parts molded therefrom.

3. The use as claimed in either of claims 1 and 2, **characterized in that** a phosphinic acid salt of the formula (I) or a diphosphinic acid salt of the formula (II) 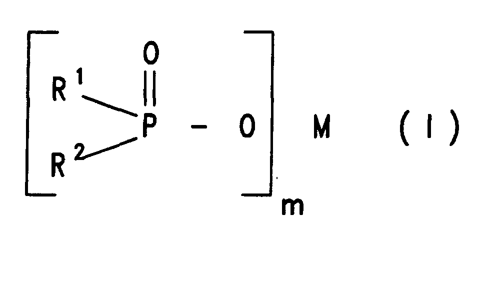 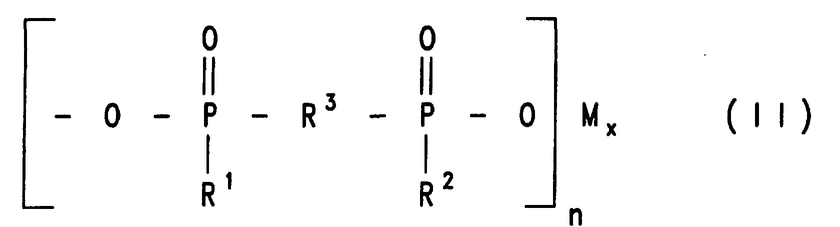 where
R¹ and R² are each C₁-C₁₆-alkyl, preferably C₁-C₈-alkyl, linear or branched, for example methyl, ethyl, n-propyl, isopropyl, n-butyl, tert-butyl, n-pentyl, n-octyl, phenyl;
R³ is C₁-C₁₀-alkylene, linear or branched, for example methylene, ethylene, n-propylene, isopropylene, n-butylene, tert-butylene, n-pentylene, n-octylene, n-dodecylene;
arylene, for example phenylene, naphthylene; alkylarylene, for example methylphenylene, ethylphenylene, tert-butylphenylene, methylnaphthylene, ethylnaphthylene, tert-butylnaphthylene;
arylalkylene, for example phenylmethylene, phenylethylene, phenylpropylene, phenylbutylene;
M is a calcium or aluminum ion;
m is 2 or 3;
n is 1 or 3;
x is 1 or 2
and/or polymers thereof is or are used.

4. The use as claimed in any of claims 1 to 3, **characterized in that** the polyester also comprises glass fiber.

5. The use as claimed in any of claims 1 to 4, **characterized in that** the tracking current resistance of moldings in the form of electrical components, mechanical components in electrical and household appliances, or housings, coverings and sheathings of electrical components and equipment is increased.

6. The use as claimed in any of claims 1 to 5, **characterized in that** the tracking current resistance of moldings in the form of coil formers, transformers, relays, switches, plug connectors, motors and motor parts, molded interconnection devices, bases, gearwheels, levers, camshafts, spacers, hinges, sliding bearings, capacitor housings, relay housings, capacitor covers or cable sheathings is increased.

## Revendications

1. Utilisation d'une masse moulée en polyester qui contient au moins un sel de calcium ou d'aluminium d'un acide phosphinique, d'un acide diphosphinique ou de leurs polymères pour la fabrication de pièces moulées présentant une plus grande résistance aux courants de fuite.

2. Utilisation d'un sel de calcium ou d'aluminium d'un acide phosphinique, d'un acide diphosphinique ou de leurs polymères pour l'augmentation de la résistance aux courants de fuite de masses moulées en polyester et de pièces moulées fabriquées à partir de celles-ci.

3. Utilisation selon l'une quelconque des revendications 1 à 2, **caractérisée en ce qu'**on utilise un sel de l'acide phosphinique selon la formule (I) ou un sel de l'acide diphosphinique selon la formule (II) et/ou leurs polymères, 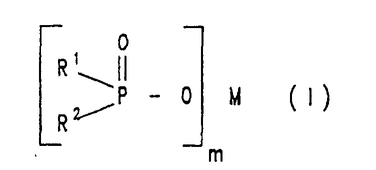 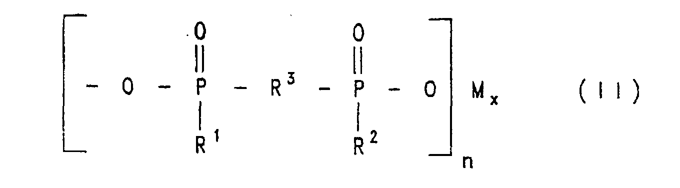 où
R¹, R² signifient un alkyle en C₁-C₁₆, de préférence un alkyle en C₁-C₈ linéaire ou ramifié, par exemple un méthyle, un éthyle, un n-propyle, un isopropyle, un n-butyle, un tert-butyle, un n-pentyle, un n-octyle, un phényle,
R³ signifie un alkylène en C₁-C₁₀ linéaire ou ramifié, par exemple un méthylène, un éthylène, un n-propylène, un isopropylène, un n-butylène, un tert-butylène, un n-pentylène, un n-octylène, un n-dodécylène ;
un arylène, par exemple un phénylène, un naphtylène ;
un alkylarylène, par exemple un méthylphénylène, un éthylphénylène, un tert-butylphénylène, un méthyl-naphtylène, un éthylnaphtylène, un tert-butyl-naphtylène ;
un arylalkylène, par exemple un phénylméthylène, un phényléthylène, un phénylpropylène, un phénylbutylène ;
M signifie des ions de calcium, d'aluminium ;
m signifie 2 ou 3 ;
n signifie 1 ou 3 ;
x signifie 1 ou 2.

4. Utilisation selon l'une quelconque des revendications 1 à 3, **caractérisée en ce que** le polyester contient en outre des fibres de verre.

5. Utilisation selon l'une quelconque des revendications 1 à 4, **caractérisée en ce que** la résistance aux courants de fuite de pièces moulées sous forme de pièces électriques, de pièces mécaniques dans des appareils électriques et domestiques ou de châssis, de recouvrements et d'enveloppes de pièces électriques et d'appareils électriques est augmentée.

6. Utilisation selon l'une quelconque des revendications 1 à 5, **caractérisée en ce que** la résistance aux courants de fuite de pièces moulées sous forme de bobines, de transformateurs, de relais, de commutateurs, de fiches de raccordement, de moteurs et de pièces de moteurs, de pièces tridimensionnelles comprenant des structures conductrices intégrées, de socles, de roues dentées, de leviers, d'arbres à cames, d'écarteurs, de charnières, de paliers lisses, de boîtiers de condensateurs, de boîtiers de relais, de couvercles de condensateurs ou de gaines de câbles est augmentée.
